# EUROPEAN PATENT APPLICATION

(11) **EP 3 656 815 A1**
(43) Date of publication of application: **27.05.2020**
(21) Application number: 18835002.9
(22) Date of filing: 19.07.2018
(51) Int. Cl.: C08L 21/00, B60C 1/00, C08K 3/04, C08K 3/36, C08K 5/24, C08K 5/40, C08K 5/44, C08L 101/00

(54) **TIRE**

(30) Priority: 19.07.2017 JP 2017140312
(71) Applicant: Bridgestone Corporation, Tokyo 104-8340 (JP)
(72) Inventor: SUZUKI Kenji, Tokyo 104-8340 (JP); SAITO Noboru, Tokyo 104-8340 (JP); TAKEI Kenichi, Tokyo 104-8340 (JP)
(74) Representative: Lang, Johannes
(86) International application number: PCT/JP2018/027017
(87) International publication number: WO 2019/017417

(57) **Abstract**

Provided is a tire that can satisfy both low heat build-up property and fracture resistance at a higher level than conventional tires. The tire has a center gauge of not less than 50 mm and contains a rubber composition obtained by blending less than 20 parts by mass of a silica with respect to 100 parts by mass of a rubber component, along with a thiuram-based accelerator, a sulfenamide-based accelerator, and a resin.

## Description

### TECHNICAL FIELD

The present invention relates to a tire, particularly a tire that can satisfy both low heat build-up property and fracture resistance at a higher level than conventional tires.

### BACKGROUND ART

In heavy-load pneumatic tires used on trucks, buses and the like, from the standpoints of fuel efficiency and tire life, it is demanded to improve the wear resistance without deteriorating the low heat build-up property, and the fracture resistance such as crack propagation resistance (tear resistance) is also an important property. With regard to these problems, Patent Document 1 proposes a rubber composition for tire treads, which not only improves the chipping resistance without aggravating heat build-up but also has high strength and high elongation and is capable of sustaining its performance over a long period.

Further, Patent Document 2 proposes a rubber composition obtained by blending a total of 30 to 70 parts by mass of a carbon black and a silica that have a nitrogen adsorption specific surface area (N₂SA) of 90 m²/g or larger and less than 3 parts by mass of an ultrahigh-molecular-weight polyethylene with respect to 100 parts by mass of a diene-based rubber mainly composed of a natural rubber and/or a butadiene rubber. It is disclosed that this rubber composition, which is a rubber composition for treads of heavy-load tires designed for icy and snowy road, can inhibit deterioration of the low heat build-up property and the fatigue resistance.

### RELATED ART DOCUMENTS

### PATENT DOCUMENTS

[Patent Document 1] JP2005-225909A
[Patent Document 2] JP2006-241338A

### SUMMARY OF THE INVENTION

### PROBLEMS TO BE SOLVED BY THE INVENTION

Particularly, in order to comply with recent increase in the size of the tires of heavy-duty vehicles and in the vehicle output, it is necessary to improve the low heat build-up property and the fracture resistance of tires during running. Rubber used as internal members of such heavy-load pneumatic tires is required to have low heat build-up as well as excellent wear resistance/cut resistance/tear resistance. From this standpoint, the rubber compositions proposed in Patent Documents 1 and 2 are not necessarily adequate as internal members of heavy-load pneumatic tires in terms of the low heat build-up property and the fracture resistance that are expected to be demanded in the future.

For example, as a method of improving the wear resistance and the cut resistance, it is known to increase the amount of a carbon black (CB) that is mainly used as a filler in tire rubbers and to reduce the particle size of the carbon black (CB upgrading); however, such a method conflicts with ensuring the low heat build-up property. In addition, as a conventional method, silica is incorporated into rubber compositions. This method is known to increase the hysteresis loss and to have an effect against chipping on rough road. However, due to a reduction in the heat build-up and notable deterioration of the workability that are caused by elasticity reduction and reversion in extended vulcanization, it is realistically difficult in factories to add a large amount of silica. Moreover, a technology for improving the low heat build-up property and the crack propagation resistance by the use of a combination of a silica and hydrazide compound has been known; however, it is still inadequate.

In view of the above, an object of the present invention is to provide a tire that can satisfy both low heat build-up property and fracture resistance at a higher level than conventional tires.

### MEANS FOR SOLVING THE PROBLEMS

The present inventors intensively studied to solve the above-described problems and consequently discovered that the low heat build-up property and the fracture resistance can both be satisfied at a high level by incorporating a prescribed amount of silica and a prescribed accelerator into a rubber composition, thereby completing the present invention.

That is, a tire of the present invention contains a rubber composition obtained by blending less than 20 parts by mass of a silica with respect to 100 parts by mass of a rubber component along with a thiuram-based accelerator, a sulfenamide-based accelerator and a resin, and the tire of the present invention is characterized by having a center gauge of not less than 50 mm. The term "center gauge" used herein refers to the distance between the tread surface and the innermost layer of an inner liner at the equatorial plane.

In the tire of the present invention, it is preferred that the rubber component contain a natural rubber and a synthetic isoprene rubber in an amount of not less than 50% by mass. In the tire of the present invention, it is also preferred that 0.5 to 20 parts by mass of the resin and 0.1 to 5 parts by mass of a hydrazide compound be incorporated with respect to 100 parts by mass of the rubber component. Further, in the tire of the present invention, it is preferred that the silica have a nitrogen adsorption specific surface area of 200 m²/g or larger. Still further, in the tire of the present invention, it is preferred that carbon be further incorporated.

In the tire of the present invention, the rubber composition is preferably used in an internal member. Particularly, the internal member is preferably a member that does not come into contact with a material other than rubber.

### EFFECTS OF THE INVENTION

According to the present invention, a tire that can satisfy both low heat build-up property and fracture resistance at a higher level than conventional tires can be provided.

### BRIEF DESCRIPTION OF THE DRAWING

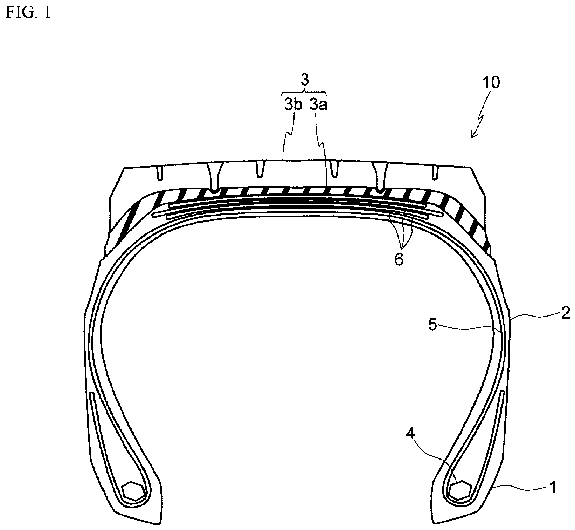

[FIG. 1] FIG. 1 is a schematic widthwise cross-sectional view illustrating a tire according to one preferred embodiment of the present invention.

### MODE FOR CARRYING OUT THE INVENTION

A rubber composition according to a tire of the present invention will now be described in detail.

The rubber composition according to the tire of the present invention is a rubber composition obtained by blending less than 20 parts by mass of a silica with respect to 100 parts by mass of a rubber component, along with a thiuram-based accelerator, sulfenamide-based accelerator and a resin. In this manner, by controlling the amount of a silica to be less than 20 parts by mass and incorporating a thiuram-based accelerator, a sulfenamide-based accelerator and a resin, the low heat build-up property and the fracture resistance, particularly the tear resistance, are specifically improved.

In the rubber composition according to the tire of the present invention, the type of rubber is not particularly restricted. Specific examples of the rubber include natural rubbers (NR), synthetic polyisoprene rubbers (IR), polybutadienes (BR), styrene-butadiene copolymers (SBR), butyl rubber (IIR), ethylene-propylene-diene copolymers (EPDM), acrylonitrile-butadiene copolymers (NBR), and combinations thereof. Thereamong, NR, BR, SBR, and combinations thereof are particularly preferred, and it is particularly suitable that the rubber component contain a natural rubber and a synthetic isoprene rubber in an amount of not less than 50% by mass.

Further, in the rubber composition according to the tire of the present invention, the amount of the silica to be blended is less than 20 parts by mass with respect to 100 parts by mass of the rubber component. When the silica is added in an amount of 20 parts by mass or more, the low heat build-up property is poor, although excellent tear resistance is attained. Meanwhile, when the amount of the silica is less than 3 parts by mass, the heat build-up cannot be sufficiently reduced in some cases. The amount of the silica is preferably 3 to 15 parts by mass.

The silica used in the rubber composition according to the tire of the present invention is not particularly restricted, and any silica used in commercially available rubber compositions may be used. Particularly, wet silica (hydrous silicic acid), dry silica (silicic anhydride), colloidal silica and the like can be used, and wet silica is particularly preferred. In the rubber composition according to the tire of the present invention, the silica preferably has a nitrogen adsorption specific surface area (BET specific surface area) of 200 m²/g or larger. The reason for this is because the larger the nitrogen adsorption specific surface area, the greater the reduction in pre-vulcanization viscosity, which is preferred from the workability standpoint. It is noted here that the nitrogen adsorption specific surface area is determined based on a single point value of BET method, which is defined by a method according to ISO5794/1. In the rubber composition according to the tire of the present invention, a silica may be used individually, or in combination of two or more thereof.

In the rubber composition according to the tire of the present invention, a thiuram-based accelerator, a sulfenamide-based accelerator and a resin are further incorporated. By incorporating these components, both the low heat build-up property and the fracture resistance can be satisfied at a high level when the rubber composition according to the tire of the present invention is used in an inner layer member of a tire.

In the rubber composition according to the tire of the present invention, the content of the thiuram-based accelerator is preferably 0.1 to 2.0 parts by mass with respect to 100 parts by mass of the rubber component. When the content of the thiuram-based accelerator is less than 0.1 parts by mass, an effect of improving the low heat build-up property and the tear resistance are not sufficiently observed, while when the thiuram-based accelerator is incorporated in an amount of greater than 2.0 parts by mass, deterioration of the scorching property of rubber can make processing difficult. The content of the thiuram-based accelerator is more preferably less than 0.5 parts by mass.

Examples of thiuram-based accelerators that can be used in the rubber composition according to the tire of the present invention include tetramethylthiuram monosulfide (TS), tetramethylthiuram disulfide (TT), tetraethylthiuram disulfide (TET), dipentamethylene thiuram hexasulfide (TRA), tetrabutylthiuram disulfide (TBT), tetrakis(2-ethylhexyl)thiuram disulfide (TOT), and tetrabenzylthiuram disulfide (TBZTD). In the rubber composition according to the tire of the present invention, these thiuram-based accelerators may be used individually, or in combination of two or more thereof.

In the rubber composition according to the tire of the present invention, the content of the sulfenamide-based accelerator is preferably 0.2 to 2.0 parts by mass with respect to 100 parts by mass of the rubber component. When the content of the sulfenamide-based accelerator is less than 0.2 parts by mass, the crack resistance and the tear resistance are poor, while the sulfenamide-based accelerator is incorporated in an amount of greater than 2.0 parts by mass, the crack resistance and the tear resistance are deteriorated.

Examples of sulfenamide-based accelerators that can be used in the rubber composition according to the tire of the present invention include *N,N*'-dicyclohexyl-2-benzothiazolyl sulfenamide, *N*-cyclohexyl-2-benzothiazolyl sulfenamide (CZ), *N*-*tert*-butyl-2-benzothiazolyl sulfenamide, and *N*-oxydiethylene-2-benzothiazolyl sulfenamide. In the rubber composition according to the tire of the present invention, these sulfenamide-based accelerators may be used individually, or in combination of two or more thereof.

In the rubber composition according to the tire of the present invention, the content of the resin is preferably 0.5 to 20 parts by mass with respect to 100 parts by mass of the rubber component. By controlling the content of the resin to be less than 0.5 parts by mass, the low heat build-up property can be largely improved; however, the tear resistance may be deteriorated. Meanwhile, when the content of the resin is greater than 20 parts by mass, the low heat build-up property may be insufficient although the tear resistance is improved. The content of the resin is more preferably 2 to 10 parts by mass. In the rubber composition according to the tire of the present invention, the type of the resin is not particularly restricted, and the resin may be a thermoplastic resin or a thermosetting resin, preferably a thermoplastic resin. In the rubber composition according to the tire of the present invention, a resin may be used individually, or two or more resins may be used in combination.

As the thermoplastic resin, specifically, natural resins (e.g., rosin-based resins and terpene-based resins), and synthetic resins having a molecular weight of preferably 500 to 5,000, more preferably 700 to 4,000 (e.g., petroleum resins, phenol resins, coal resins and xylene-based resins), can be used.

Examples of the rosin-based resins include glycerin or pentaerythritol esters of gum rosins, tall oil rosins, wood rosins, hydrogenated rosins, disproportionated rosins, polymerized rosins, and modified rosins.

Examples of the terpene-based resins include terpene resins, such as *α*-pinene resins, *β*-pinene resins and dipentene resins; aromatic-modified terpene resins; terpene-phenol resins; and hydrogenated terpene resins. Among the above-described natural resins, from the standpoint of the wear resistance of the rubber composition in which the resin is incorporated, polymerized rosins, terpene-phenol resins and hydrogenated terpene resins are preferred.

Petroleum resins are obtained by, for example, direct polymerization of cracked oil fractions in the form of a mixture with a Friedel-Crafts catalyst, which fractions contain unsaturated hydrocarbons (e.g., olefins and diolefins) generated as by-products by thermal cracking of naphtha in the petrochemical industry, along with petrochemical basic raw materials such as ethylene and propylene. Examples of the petroleum resins include aliphatic petroleum resins produced by (co)polymerization of a C₅ fraction obtained by thermal cracking of naphtha; aromatic petroleum resins produced by (co)polymerization of a C₉ fraction obtained by thermal cracking of naphtha; copolymerized petroleum resins produced by copolymerization of a C₅ fraction and a C₉ fraction; alicyclic compound-based petroleum resins, such as hydrogenated petroleum resins and dicyclopentadiene-based petroleum resins; and styrene-based resins, such as styrene, substituted styrene, and copolymers of styrene and other monomer(s).

The C₅ fraction obtained by thermal cracking of naphtha usually contains olefinic hydrocarbons, such as 1-pentene, 2-pentene, 2-methyl-1-butene, 2-methyl-2-butene, and 3-methyl-1-butene; and diolefinic hydrocarbons, such as 2-methyl-1,3-butadiene, 1,2-pentadiene, 1,3-pentadiene, and 3-methyl-1,2-butadiene. The aromatic petroleum resins produced by (co)polymerization of a C₉ fraction are resins obtained by polymerizing an aromatic compound(s) having 9 carbon atoms that contain vinyltoluene and indene as principal monomers, and specific examples of the C₉ fraction obtained by thermal cracking of naphtha include styrene homologues, such as α-methyl styrene, *β*-methylstyrene and γ-methylstyrene; and indene homologues, such as indene and coumarone. Their trade names include PETROJIN manufactured by Mitsui Chemicals, Inc., PETLITE manufactured by Mikuni Chemical, Co., Ltd., NEOPOLYMER manufactured by JXTG Nippon Oil & Energy Corporation, and PETCOAL and PETRORACK manufactured by Tosoh Corporation.

Further, a modified petroleum resin obtained by modification of a petroleum resin composed of C₉ fraction is suitably used as a resin that enables to satisfy both gripping performance and factory workability. Examples of the modified petroleum resin include C₉ petroleum resins modified with an unsaturated alicyclic compound, C₉ petroleum resins modified with a hydroxy group-containing compound, and C₉ petroleum resins modified with an unsaturated carboxylic acid compound.

Preferred examples of the unsaturated alicyclic compound include cyclopentadiene, methylcyclopentadiene, and Diels-Alder reaction products of alkylcyclopentadienes, such as dicyclopentadiene, cyclopentadiene-methylcyclopentadiene codimer and tricyclopentadiene, among which dicyclopentadiene is particularly preferred. A dicyclopentadiene-modified C₉ petroleum resin can be obtained by thermal polymerization or the like in the presence of both dicyclopentadiene and a C₉ fraction. Examples of the dicyclopentadiene-modified C₉ petroleum resin include NEOPOLYMER 130S manufactured by JXTG Nippon Oil & Energy Corporation.

As the thermosetting resin, for example, an epoxy resin, a phenol resin, an unsaturated imide resin, a cyanate resin, an isocyanate resin, a benzoxazine resin, an oxetane resin, an amino resin, an unsaturated polyester resin, an allyl resin, a silicone resin, a triazine resin, or a melamine resin can be used. Among these resins, it is preferred to use a phenol-based thermosetting resin.

Phenol-based thermosetting resins are mainly obtained as condensates of a phenol and an aldehyde, and examples thereof include modification products obtained by cashew modification, oil modification or the like. Specific examples of such phenol-based thermosetting resins include novolac-type resorcin-formaldehyde resins and cresol resins. Further, examples of modified phenol resins include cashew-modified phenol resins obtained by modification of phenol resins with cashew oil; oil-modified phenol resins obtained by modification of phenol resins with an oil such as linolic acid, linolenic acid or oleic acid; alkylbenzene-modified phenol resins obtained by modification of phenol resins with an alkylbenzene such as xylene; epoxy-modified phenol resins; aniline-modified phenol resins; and melamine-modified phenol resins.

The rubber composition according to the tire of the present invention may further contain a guanidine-based accelerator. In this case, the total amount of the sulfenamide-based accelerator and the guanidine-based accelerator is preferably less than 2.0 parts by mass, more preferably less than 1.0 part by mass, with respect to 100 parts by mass of the rubber component. When the total amount of the guanidine-based accelerator and the sulfenamide-based accelerator is 2.0 parts by mass or greater, the effects of the present invention may not be favorably obtained. Further, the content of the guanidine-based accelerator is preferably less than 0.3 parts by mass with respect to 100 parts by mass of the rubber component. When the content of the guanidine-based accelerator is 0.3 parts by mass or greater, the effects of the present invention may not be favorably obtained likewise.

Examples of guanidine-based accelerators that can be used in the rubber composition according to the tire of the present invention include diphenylguanidine and di-o-tolylguanidine. In the rubber composition according to the tire of the present invention, these guanidine-based accelerators may be used individually, or in combination of two or more thereof.

Further, the rubber composition according to the tire of the present invention preferably contains a hydrazide compound. The content of the hydrazide compound is preferably 0.1 to 5 parts by mass with respect to 100 parts by mass of the rubber component. When the content of the hydrazide compound is less than 0.1 parts by mass, the low heat build-up property is insufficient, while an addition of greater than 5 parts by mass of the hydrazide compound does not lead to a difference in the effect and is thus not preferred from the cost standpoint. The content of the hydrazide compound is more preferably 0.5 to 2.0 parts by mass, still more preferably 0.5 to 1.0 part by mass.

Examples of the hydrazide compound used in the rubber composition according to the tire of the present invention include 3-hydroxy-2-naphthoic acid hydrazide derivatives, and derivatives of *N*'-(1,3-dimethylbutylidene)salicylic acid hydrazide, 4-hydroxybenzoic acid hydrazide, anthranilic acid hydrazide, and 1-hydroxy-2-naphthoic acid hydrazide. The 3-hydroxy-2-naphthoic acid hydrazide derivatives are, for example, 3-hydroxy-2-naphthoic acid hydrazides, such as 3-hydroxy-2-naphthoic acid (1-methylethylidene)hydrazide, 3-hydroxy-2-naphthoic acid (1-methylpropylidene)hydrazide, 3-hydroxy-2-naphthoic acid (1,3-dimethylpropylidene)hydrazide, and 3-hydroxy-2-naphthoic acid (1-phenylethylidene)hydrazide. Thereamong, derivatives of 3-hydroxy-2-naphthoic acid hydrazide and *N*'-(1,3-dimethylbutylidene)salicylic acid hydrazide are preferred since they can reduce the Mooney viscosity without aggravating the heat build-up, and 3-hydroxy-*N*'-(1,3-dimethylbutylidene)-2-naphthoic acid hydrazide, which is a derivative of 3-hydroxy-2-naphthoic acid hydrazide, is particularly preferred because of its prominent effect. In the rubber composition according to the tire of the present invention, these hydrazide compounds may be used individually, or in combination of two or more thereof.

In the rubber composition according to the tire of the present invention, it is preferred that a carbon black be further incorporated. As for the amount of the carbon black to be added, the carbon black is added such that the total amount of the silica and the carbon black is 5 to 50 parts by mass. When the total amount of the silica and the carbon black is less than 5 parts by mass, there may be a case where a specific reduction in the heat build-up is not observed, while when the total amount of the silica and the carbon black is greater than 50 parts by mass, the low heat build-up property may be deteriorated, although the tear resistance is improved.

In the rubber composition according to the tire of the present invention, the carbon black is not particularly restricted and, for example, a high-, medium- or low-structure carbon black of SAF, ISAF, IISAF, N339, HAF, FEF, GPF or SRF grade can be used. Thereamong, a carbon black having an iodine adsorption amount of 35 to 90 g/kg can be particularly preferably used. When the iodine adsorption amount is less than 35 g/kg, excellent low heat build-up property is attained; however, the tear resistance may be poor. Meanwhile, when the iodine adsorption amount is greater than 90 g/kg, excellent tear resistance is attained; however, the low heat build-up property may be deteriorated. It is noted here that the iodine adsorption amount is a value measured in accordance with JIS K6217-1:2001.

In the rubber composition according to the tire of the present invention, what is important is only that the silica is incorporated in an amount of less than 20 parts by mass with respect to 100 parts by mass of the rubber component along with the thiuram-based accelerator, the sulfenamide-based accelerator and the resin, and there is no other particular restriction. In the rubber composition according to the tire of the present invention, as desired, various chemicals that are usually used in the rubber industry, examples of which include a vulcanizing agent, a vulcanization accelerator, a softening agent, an age inhibitor, a viscosity-reducing agent, zinc white and stearic acid, may be used appropriately within a range that does not adversely affect the object of the present invention.

One example of the vulcanizing agent is sulfur, and the amount thereof to be incorporated as a sulfur component is preferably 0.1 to 10.0 parts by mass, more preferably 1.0 to 5.0 parts by mass, with respect to 100 parts by mass of the rubber component. When the amount is less than 0.1 parts by mass, the breaking strength, the wear resistance and the low heat build-up property of the resulting vulcanized rubber may be deteriorated, while when the amount is greater than 10.0 parts by mass, the rubber elasticity is lost.

Other vulcanization accelerator is not particularly restricted, and examples thereof include thiazole-based vulcanization accelerators, such as M (2-mercaptobenzothiazole) and DM (dibenzothiazyl disulfide). The amount thereof to be incorporated is preferably 0.1 to 5.0 parts by mass, more preferably 0.2 to 3.0 parts by mass, with respect to 100 parts by mass of the rubber component.

As the softening agent, a processed oil can be used, and examples thereof include paraffin-based processed oils, naphthene-based processed oils, and aromatic processed oils. For example, an aromatic processed oil is used for applications where emphasis is given to the tensile strength and the wear resistance, and a naphthene-based or paraffin-based processed oil is used for applications where emphasis is given to the hysteresis loss and the low-temperature characteristics. The amount of the processed oil to be incorporated is preferably 0 to 100 parts by mass with respect to 100 parts by mass of the rubber component, and deterioration of the tensile strength and the low heat build-up property (low fuel consumption) of the resulting vulcanized rubber can be suppressed as long as the amount of the processed oil is 100 parts by mass or less.

Examples of the age inhibitor include 3C (*N*-isopropyl-*N*'-phenyl-*p*-phenylenediamine), 6C (*N*-(1,3-dimethylbutyl)-*N*'-phenyl-*p*-phenylenediamine), AW (6-ethoxy-2,2,4-trimethyl-1,2-dihydroquinoline), and high-temperature condensates of diphenylamine and acetone. The amount of the age inhibitor to be incorporated is preferably 0.1 to 5.0 parts by mass, more preferably 0.3 to 3.0 parts by mass, with respect to 100 parts by mass of the rubber component.

The rubber composition according to the tire of the present invention can be obtained by kneading the above-described components using a kneading machine, for example, an open-type kneader such as a roll or a closed-type kneader such as a Banbury mixer, and the rubber composition can be molded and then vulcanized to be applied to various rubber products. The use of the rubber composition according to the tire of the present invention is not particularly restricted and, because of its excellent low heat build-up property and tear resistance, the rubber composition according to the tire of the present invention may be used in soft stiffeners, belt-end inserts, sidewall fillers and the like of tires. The rubber composition according to the tire of the present invention can be particularly preferably used as a base rubber of heavy-load pneumatic tires.

The tire of the present invention will now be described referring to the drawing.

FIG. 1 is a schematic widthwise cross-sectional view illustrating a tire according to one preferred embodiment of the present invention. An illustrated tire 10, which is a heavy-load pneumatic tire, includes: a pair of bead portions 1; a pair of side portions 2; a tread portion 3; a carcass 5 toroidally extending between bead cores 4 embedded in the respective bead portions 1; and a belt 6 constituted by plural belt layers arranged on the tire radial-direction outer side of the carcass 5 in a crown portion. In the tire of the present invention, the above-described rubber composition according to the tire of the present invention is used. As described above, the rubber composition according to the tire of the present invention has excellent low heat build-up property and tear resistance and, therefore, can be preferably used in an internal member. The rubber composition according to the tire of the present invention is particularly suitable for tires having a center gauge of not less than 50 mm.

In the tire of the present invention, the internal member is not particularly restricted; however, it is preferably a member that does not come into contact with a material other than rubber and contains no reinforcing material composed of, for example, a metal or organic fibers, i.e. a rubber member other than a coating rubber. Examples thereof include a base rubber 3a; a pad that is a reinforcing material for at least partially reinforcing the radial-direction outer part of the bead portion 1, adjacently to the outer side of the folded carcass 5 that is folded back around each core 4; a squeezee rubber between plies; a cushion rubber between the tread and belts; and bead fillers.

In the tire 10 of the present invention, other constitutions are not particularly restricted as long as the above-described rubber composition according to the tire of the present invention is used, and known members can be used. Further, as a gas filled into the tire 10 of the present invention, an air having normal or adjusted oxygen partial pressure, or an inert gas such as nitrogen, argon or helium can be used. The tire of the present invention has been described thus far using a heavy-load tire such as a tire for trucks and buses as an example; however, the tire of the present invention is not restricted thereto. The tire of the present invention can be applied to any tire for passenger vehicles, small trucks, construction vehicles and the like.

### EXAMPLES

The present invention will now be described in more detail by way of examples thereof.

### <Examples 1 to 7 and Comparative Examples 1 to 17>

Rubber compositions were prepared in accordance with the respective formulations shown in Tables 1 to 5 below. Applying each of the thus obtained rubber compositions as a base rubber, tires of the type illustrated in FIG. 1 were produced at a tire size of 53/80R63. For the thus obtained tires, the crack resistance, the low heat build-up property and the tear resistance were evaluated by the below-described procedures. The results thereof are shown together in Tables 1 to 5.

### <Crack Resistance>

A test piece of 1 mm in thickness and 6 mm in width was prepared from the base rubber of each tire, and a repeated tensile test was conducted using a dumbbell-shaped No. 7 piece (JIS K6251) to evaluate the crack resistance based on the number of operations required for breaking the test piece with input energy. The results were presented as index values, taking the value of Comparative Example 14 as 100. A larger value means superior crack resistance.

### <Low Heat Build-Up Property>

For each tire, a drum test was conducted at a constant speed under a stepwise load condition, and the temperature was measured at a certain depth inside the tread composed of the rubber composition of each Example. The reciprocal value of the thus measured value was calculated and presented as an index value, taking the value of Comparative Example 14 as 100. A smaller index value means superior low heat build-up property.

### <Tear Resistance>

After the actual use of each tire to a remaining groove depth of 3 mm, the area of rubber missing parts per 30 cm of the circumference of the tire rubber surface was measured. The reciprocal value of the thus measured value was calculated and presented as an index value, taking the value of Comparative Example 14 as 100. A larger index value means superior fracture resistance and tear resistance.

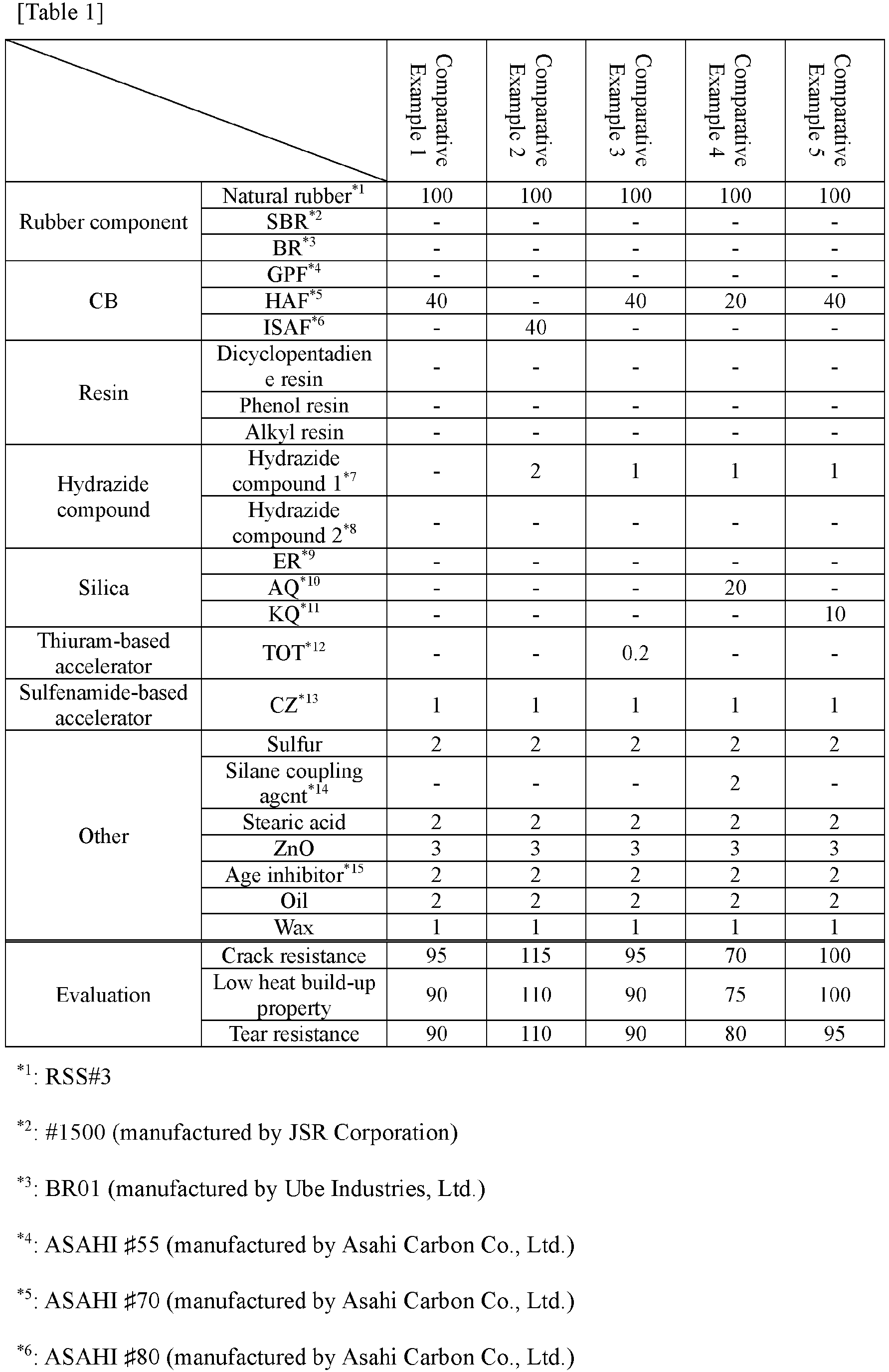

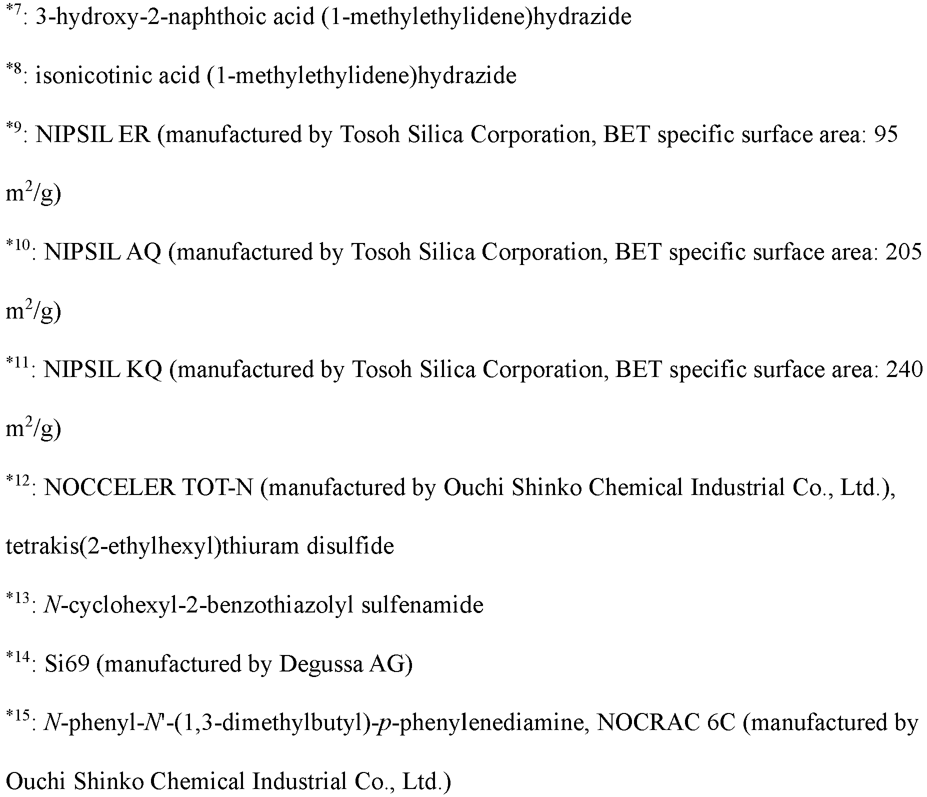

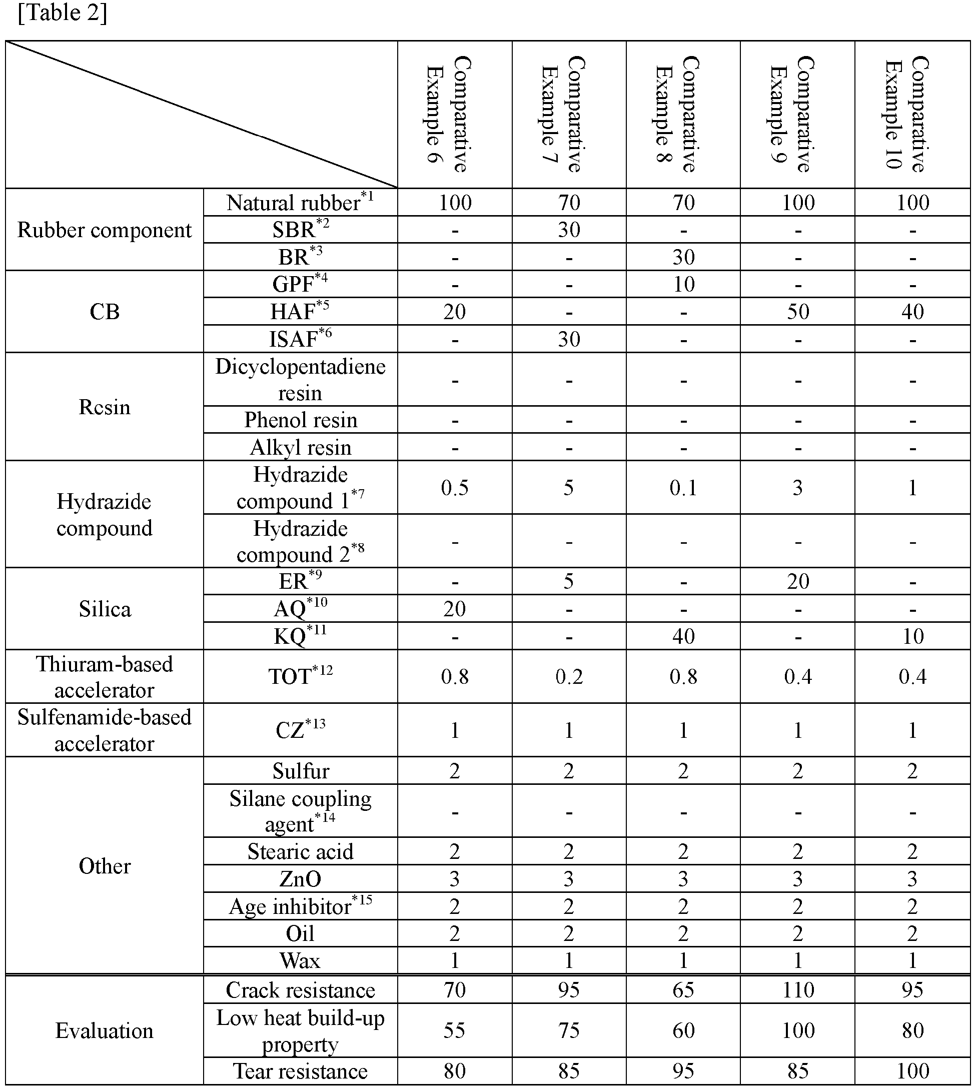

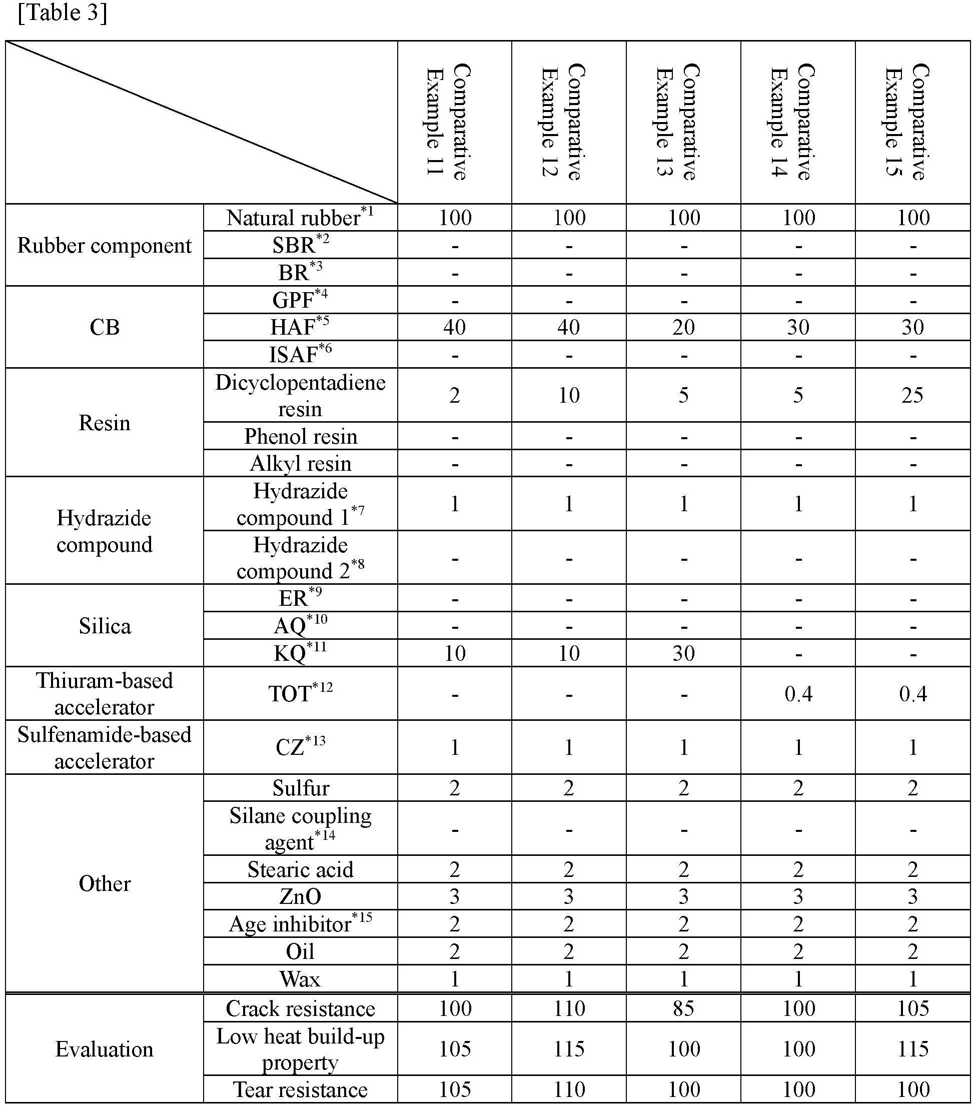

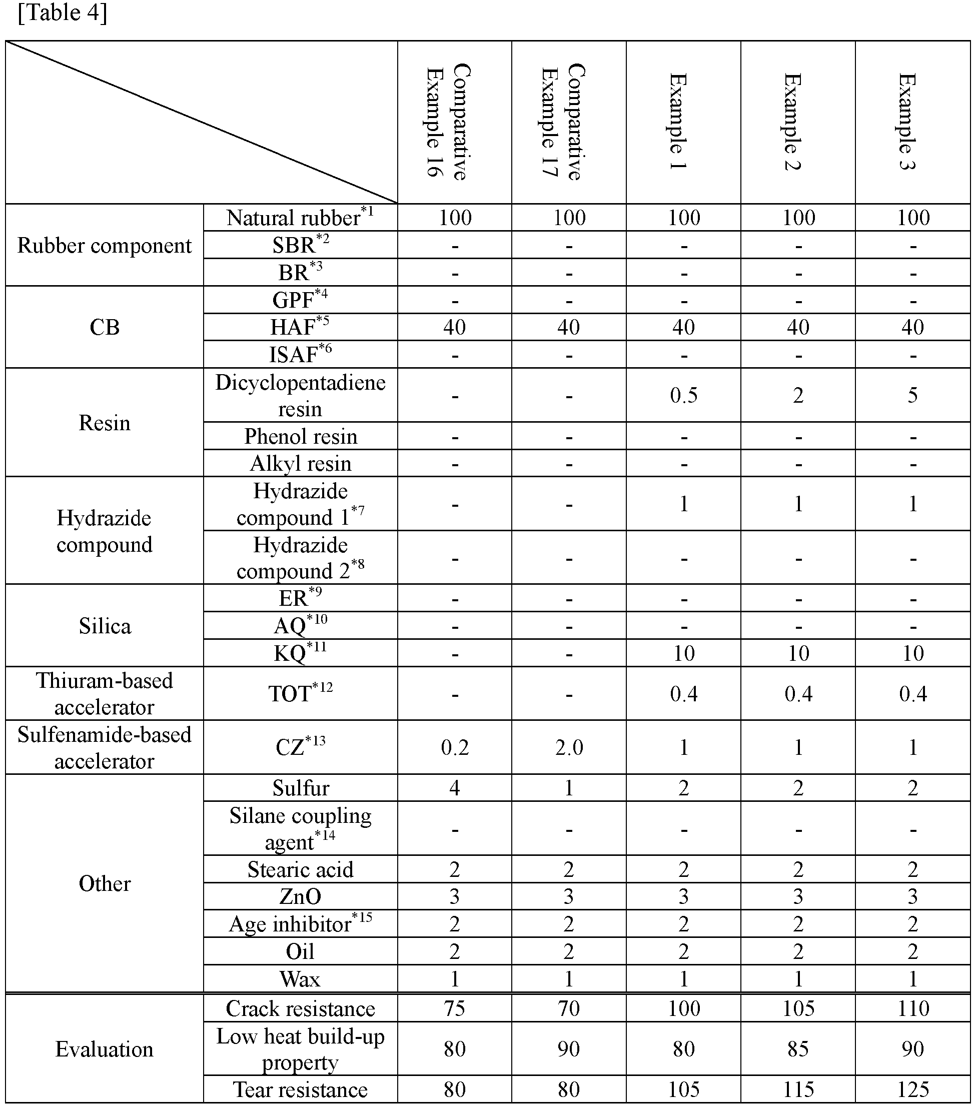

**[Table 5]**

| | | Example 4 | Example 5 | Example 6 | Example 7 |
|---|---|---|---|---|---|
| Rubber component | Natural rubber^{*1} | 100 | 100 | 100 | 100 |
| | SBR^{*2} | - | - | - | - |
| | BR^{*3} | - | - | - | - |
| CB | GPF^{*4} | - | - | - | - |
| | HAF^{*5} | 40 | 40 | 40 | 40 |
| | ISAF^{*6} | - | - | - | - |
| Resin | Dicyclopentadiene resin | 10 | 20 | - | - |
| | Phenol resin | - | - | 5 | - |
| | Alkyl resin | - | - | - | 5 |
| Hydrazide compound | Hydrazide compound 1^{*7} | 1 | 1 | 1 | 1 |
| | Hydrazide compound 2^{*8} | - | - | - | - |
| Silica | ER^{*9} | - | - | - | - |
| | AQ^{*10} | - | - | - | - |
| | KQ^{*11} | 10 | 10 | 10 | 10 |
| Thiuram-based accelerator | TOT^{*12} | 0.4 | 0.4 | 0.4 | 0.4 |
| Sulfenamide-based accelerator | CZ^{*13} | 1 | 1 | 1 | 1 |
| Other | Sulfur | 2 | 2 | 2 | 2 |
| | Silane coupling agent^{*14} | - | - | - | - |
| | Stearic acid | 2 | 2 | 2 | 2 |
| | ZnO | 3 | 3 | 3 | 3 |
| | Age inhibitor^{*15} | 2 | 2 | 2 | 2 |
| | Oil | 2 | 2 | 2 | 2 |
| | Wax | 1 | 1 | 1 | 1 |
| Evaluation | Crack resistance | 120 | 140 | 100 | 100 |
| | Low heat build-up property | 95 | 100 | 85 | 85 |
| | Tear resistance | 135 | 145 | 115 | 115 |

From Tables 1 to 5 above, it is seen that the tires according to the present invention had both satisfactory low heat build-up property and satisfactory tear resistance at the same time.

### DESCRIPTION OF SYMBOLS

1: bead portion
2: side wall portion
3: tread portion
3a: base rubber
3b: cap rubber
4: bead core
5: carcass
6: belt

## Claims

1. A tire comprising a rubber composition obtained by blending less than 20 parts by mass of a silica with respect to 100 parts by mass of a rubber component, along with a thiuram-based accelerator, a sulfenamide-based accelerator, and a resin,
wherein the tire has a center gauge of not less than 50 mm.

2. The tire according to claim 1, wherein the rubber component comprises a natural rubber and a synthetic isoprene rubber in an amount of not less than 50% by mass.

3. The tire according to claim 1 or 2, wherein 0.5 to 20 parts by mass of the resin and 0.1 to 5 parts by mass of a hydrazide compound are incorporated with respect to 100 parts by mass of the rubber component.

4. The tire according to any one of claims 1 to 3, wherein the silica has a nitrogen adsorption specific surface area of 200 m²/g or larger.

5. The tire according to any one of claims 1 to 4, wherein carbon is further incorporated.

6. The tire according to any one of claims 1 to 5, wherein the rubber composition is used in an internal member.

7. The tire according to claim 6, wherein the internal member does not come into contact with a material other than rubber.
